(19) Europäisches Patentamt / European Patent Office / Office européen des brevets

(11) **EP 3 086 518 B1**

(12) **EUROPEAN PATENT SPECIFICATION**

(45) Date of publication and mention
of the grant of the patent:
**06.03.2019 Bulletin 2019/10**

(21) Application number: **14870337.4**

(22) Date of filing: **18.11.2014**

(51) Int Cl.:
*H04L 12/801* (2013.01)       *H04L 12/823* (2013.01)
*H04L 12/835* (2013.01)

(86) International application number:
**PCT/CN2014/091343**

(87) International publication number:
**WO 2015/085849 (18.06.2015 Gazette 2015/24)**

(54) **CONGESTION AVOIDANCE IN A NETWORK DEVICE**

ÜBERLASTUNGSVERMEIDUNG IN EINER NETZWERKVORRICHTUNG

ÉVITEMENT DE CONGESTION DANS UN DISPOSITIF DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.12.2013 CN 201310665388**

(43) Date of publication of application:
**26.10.2016 Bulletin 2016/43**

(73) Proprietor: **Huawei Technologies Co., Ltd.
Longgang District
Shenzhen, Guangdong 518129 (CN)**

(72) Inventors:
• **LI, Jin
Shenzhen
Guangdong 518129 (CN)**
• **HAN, Lei
Shenzhen
Guangdong 518129 (CN)**
• **WANG, Hao
Shenzhen
Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
WO-A1-2004/084508       CN-A- 1 964 310
CN-A- 102 223 675       US-A1- 2005 195 740
US-A1- 2010 027 425       US-B1- 6 687 254

• WU: 'Qinghai Control Congestion Algorithm
Based on Individual Flow and Sharing Indices'
COAL TECHNOLOGY vol. 29, no. 10, 31 October
2010, pages 179 - 181, XP008182597

## Description

## TECHNICAL FIELD

The present invention relates to the communications field, and in particular, to a method for avoiding congestion on a network device and a network device.

## BACKGROUND

In a communications network, a network device receives a packet sent by a transmit end and forwards the packet to a receive end. However, when there are a relatively large quantity of packets sent by the transmit end, a case of congestion occurs on the network device. Congestion avoidance of a network device is performed by monitoring usage of storage space in the network device and proactively discarding some packets in the storage space when congestion tends to increase, so that a problem of congestion on the network device is resolved by adjusting data traffic in the network device.

In the prior art, a random early detection (RED) algorithm, a weighted random early detection (WRED) algorithm and the like are generally used to resolve the foregoing problem. Exemplarily, in an RED algorithm, a low limit and a high limit are set for a size of the foregoing storage space. If a size of currently used storage space is between the low limit and the high limit, incoming packets begin to be discarded randomly.

Patent document No. US2005/019540 discloses a method for controlling packet congestion in which packets are processed according to each flow like the per-flow method, in a single queue in the FIFO method. A program storage device receives at least one packet flow; defines identifiers for the received at least one packet flow; numbers each of the defined at least one packet flow; calculates a queue length of each of the at least one packet flow; allocates a maximum queue threshold value, a minimum queue threshold value, and a maximum probability value of each of the at least one packet flow; and drops or accepts an incoming packet of a flow according to the calculated packet drop probability upon a queue length of a currently received packet being between the maximum queue threshold value and the minimum queue threshold value.

Patent document No. US2010/0027425 discloses a method for network congestion avoidance in which a packet dropping probability for a particular packet is determined as a function of the current flow cost and average flow cost and average flow cost to provide fair allocation of network communications resources.

According to the foregoing algorithm, after receiving a series of packets sent by the transmit end, the network device performs packet discarding processing on the series of packets in a manner of randomly and discretely discarding packets. In this way, once one packet is discarded by the network device, the receive end notifies the transmit end that a packet discarding phenomenon occurs on the network device, and the transmit end determines that a congestion phenomenon currently occurs on the network device, thereby decreasing a quantity of packets to be sent. Accordingly, a quantity of packets that are forwarded by the network device is also decreased. If the network device discards a plurality of packets, a throughput of the network device is greatly decreased.

## SUMMARY

Embodiments of the present invention provide a method for avoiding congestion on a network device and a network device, in order to resolve a problem of a decrease in a throughput of a network device in the prior art caused when the network device performs, after receiving a series of packets, packet discarding processing on the series of packets in a manner of randomly and discretely discarding packets.

The present invention is defined in the appended independent claims to which reference should be made. Advantageous features are set out in the appended dependent claims.

## BRIEF DESCRIPTION OF DRAWINGS

To describe the technical solutions in the embodiments of the present invention more clearly, the following briefly describes the accompanying drawings required for describing the embodiments.

FIG. 1 is a schematic diagram of a method for avoiding congestion on a network device according to an embodiment of the present invention;

FIG. 2 is a schematic diagram of a function relationship between a size of used storage space and a first threshold in an embodiment of the present invention;

FIG. 3 is a schematic diagram of a function relationship between a size of used storage space and a second threshold in an embodiment of the present invention;

FIG. 4 is a schematic diagram of packets received by a network device when a length of a current storage queue is between a first limit and a second limit in an embodiment of the present invention;

FIG. 5 is a schematic diagram of a situation of TCP stream grouping of packets received by the network device when a length of a current storage queue is between a first limit and a second limit in Embodiment 1 of the present invention;

FIG. 6 is a schematic structural diagram of a network device according to an embodiment of the present invention; and

FIG. 7 is a schematic structural diagram of another network device according to an embodiment of the present invention.

**DESCRIPTION OF EMBODIMENTS**

The following clearly describes the technical solutions in the embodiments of the present invention with reference to the accompanying drawings in the embodiments of the present invention.

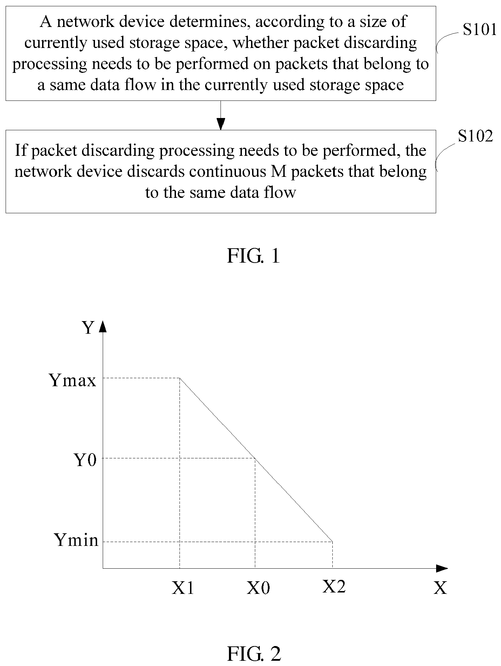

With reference to FIG. 1, a method for avoiding congestion on a network device according to an embodiment of the present invention includes the following steps:

S101. A network device determines, according to a size of currently used storage space, whether packet discarding processing needs to be performed on packets that belong to a same data flow in the currently used storage space.

There are N packets that belong to the same data flow, and N≥2.

In hardware resources of the network device, some hardware resources are used as storage space of the network device. When data is written in or read from the storage space, the size of the currently used storage space changes.

The size of the currently used storage space may be expressed by a quantity of bytes of the currently used storage space, and certainly, the size of the currently used storage space may also be expressed by a quantity of packets stored in the currently used storage space.

Exemplarily, assuming that there is no data in the current storage space, if 5 MB data is written in the storage space and no data is read from the storage space, the size of the currently used storage space is 5 MB; if 3 MB data is read from the foregoing storage space and no data is written in the storage space, the size of the currently used storage space changes from 5 MB to 2 MB.

Still exemplarily, assuming that there is no packet in the current storage space, if five packets are written in the storage space and no packet is read from the storage space, the size of the currently used storage space is five packets; if three packets are read from the foregoing storage space and no packet is written in the storage space, the size of the currently used storage space changes from five packets to two packets.

The belonging to a same data flow means that, if several packets are identical in at least one of a source Internet Protocol (IP) address, a destination IP address, a protocol number, a data flow source port, and a data flow destination port, the several packets belong to a same data flow.

In this step, packets stored in the currently used storage space may belong to a same data flow, or only N packets thereof belong to a same data flow.

Exemplarily, assuming that there are totally L (L≥N) packets stored in the currently used storage space, if L=N, the L packets stored in the currently used storage space belong to a same data flow; if L>N, only N packets in the L packets stored in the currently used storage space belong to a same data flow.

In this step, specifically, the network device may determine, in the following two manners, whether packet discarding processing needs to be performed on the packets that belong to the same data flow.

Manner 1:

(1) Acquire random numbers of the N packets that belong to the same data flow.

Preferably, a random number of a packet is a probability of randomly discarding the packet, and the probability of randomly discarding the packet is between 0 and 100%. Certainly, a random number of a packet may also be a number set by the network device for the packet, and the number may range from 0 to 100.

(2) Determine a current first threshold.

The first threshold is a critical value for determining whether packet discarding occurs in the data flow. The first threshold may be an empirical value, or may be a variable value.

Preferably, this step may specifically be: when the size of the currently used storage space is between a first limit and a second limit, the network device determines the current first threshold according to the size of the currently used storage space and a function relationship between a size of used storage space and a first threshold. In the function relationship between the size of the used storage space and the first threshold, one of the first limit and the second limit corresponds to a maximum first threshold, and the other thereof corresponds to a minimum first threshold.

In the function relationship between the size of the used storage space and the first threshold, the size of the used storage space may be positively correlated with the first threshold, or certainly, the size of the used storage space may be negatively correlated with the first threshold.

The positive correlation means that if a value of a variable is increased or decreased, a value of another variable is increased or decreased accordingly. The negative correlation means that if a value of a variable is increased or decreased, a value of another variable is decreased or increased accordingly.

That is, if the first limit corresponds to the maximum first threshold, and the second limit corresponds to the minimum first threshold, the size of the used storage space is negatively correlated with the first threshold in the function relationship between the size of the used storage space and the first threshold.

If the first limit corresponds to the minimum first threshold, and the second limit corresponds to the maximum first threshold, the size of the used storage space is positively correlated with the first threshold in the function relationship between the size of the used storage space and the first threshold.

Preferably, in this embodiment, in the function relationship between the size of the used storage space and the first threshold, the size of the used storage space is negatively correlated with the first threshold. In this case, exemplarily, for a schematic diagram of the function relationship between the size of the used storage space and the first threshold, reference may be made to FIG. 2.

In FIG. 2, an abscissa X represents a size of used storage space, an ordinate Y represents a first threshold, X1 represents a first limit, X2 represents a second limit, and X0 represents a size of currently used storage space; Ymax represents a maximum first threshold, Ymin represents a minimum first threshold, and Y0 represents a current first threshold, where the first limit X1 corresponds to the maximum first threshold Ymax, and the second limit X2 corresponds to the minimum first threshold Ymin.

Exemplarily, if a random number of a packet is a probability of randomly discarding the packet, the maximum first threshold Ymax may be 95%, and the minimum first threshold Ymin may be 5%.

Still exemplarily, if a random number of a packet is expressed by a number within a value range from 0 to 100, the maximum first threshold Ymax may be 95, and the minimum first threshold Ymin may be 5.

It should be noted that, the function relationship between the size of the used storage space and the first threshold in FIG. 2 is linear, which is only exemplary, or certainly, the function relationship may be nonlinear. No matter whether the function relationship is a linear relationship or a nonlinear relationship, in this embodiment, a slope of a curve Y-X is negative when the size of the currently used storage space X0 is between the first limit X1 and the second limit X2.

(3) Determine, according to the random numbers of the N packets and the current first threshold, whether packet discarding processing needs to be performed on the packets that belong to the same data flow.

In this step, if the current first threshold is a variable value, and the size of the used storage space is negatively correlated with the first threshold in the function relationship between the size of the used storage space and the first threshold, preferably, this step may specifically include the following:

If a sum of the random numbers of the N packets is less than the current first threshold, it is determined that packet discarding processing does not need to be performed on the packets that belong to the same data flow.

Further, in this case, it may be determined that the data flow to which the N packets belong is a small data flow.

In the prior art, each time when a network device discards a packet, a transmit end receives three acknowledgment (ACK) packets fed back by a receive end, so that the transmit end resends the discarded packet.

With regard to a small data flow, since there are a relatively low quantity of packets in the data flow (generally there are five to six packets), once the network device discards a packet located at a later location of the data flow, the transmit end fails to receive the three ACK packets fed back by the receive end, and the transmit end can resend the discarded packet only when a time for retransmitting packets that is preset by the transmit end expires, thereby resulting in an increase in a transmission time of the data flow. Therefore, in the present invention, to avoid a problem of an increase in a transmission time caused by packet discarding, with regard to a small data flow, the network device does not need to perform packet discarding processing on the data flow.

If the sum of the random numbers of the N packets is greater than the current first threshold, it is determined that packet discarding processing needs to be performed on the packets that belong to the same data flow.

Further, in this case, it may be determined that the data flow to which the N packets belong is a large data flow.

With regard to a large data flow, since there are a relatively large quantity of packets in the data flow, even if the network device discards a plurality of packets, relatively great impact is not caused on a transmission time of the data flow. Therefore, with regard to a large data flow, the network device may perform packet discarding processing on the data flow.

Further, when a same quantity of packets are discarded, if the network device uses a manner of randomly and discretely discarding packets in the prior art, each time when the network device discards a packet, a receive end notifies a transmit end that a packet discarding phenomenon occurs on the current network device, and then the transmit end determines that a congestion phenomenon occurs on the current network device, thereby decreasing a quantity of packets to be sent. Accordingly, a quantity of packets that are forwarded by the network device is also decreased. If the network device discards a plurality of packets, a throughput of the network device is greatly decreased.

In the present invention, since the network device performs packet discarding processing on the packets that belong to the same data flow, only when continuous packet discarding occurs on the network device once, the receive end notifies the transmit end that a packet discarding phenomenon occurs on the current network device. In this case, since a quantity of packets that are discarded is fixed, by using the method of the present invention, a quantity of times for determining, by the transmit end, that congestion phenomena occur on the current network device is decreased, and a quantity of times for decreasing a quantity of packets to be sent is decreased, thereby relieving a problem of a decrease in a throughput of the network device.

Manner 2:

(1) Acquire a random number of the data flow.

Preferably, a random number of a data flow is a probability of randomly discarding the data flow, and the probability of randomly discarding the data flow is between 0 and 100%. Certainly, a random number of a data flow may also be a number set by the network device for the data flow, and the number may range from 0 to 100.

(2) Determine a current second threshold.

The second threshold is a critical value for determining whether packet discarding occurs in the data flow. Similarly, the current second threshold may be an empirical value, or may be a variable value.

If the current second threshold is a variable value, in this case, preferably, when the size of the currently used storage space is between a first limit and a second limit, the network device may determine the current second threshold according to the size of the currently used storage space and a function relationship between a size of used storage space and a second threshold. In the function relationship between the size of the used storage space and the second threshold, one of the first limit and the second limit corresponds to a minimum second threshold, and the other thereof corresponds to a maximum second threshold.

In the function relationship between the size of the used storage space and the second threshold, the size of the used storage space may be positively correlated with the second threshold, or certainly, the size of the used storage space may be negatively correlated with the second threshold.

That is, if the first limit corresponds to the minimum second threshold, and the second limit corresponds to the maximum second threshold, the size of the used storage space is positively correlated with the second threshold in the function relationship between the size of the used storage space and the second threshold.

If the first limit corresponds to the maximum second threshold, and the second limit corresponds to the minimum second threshold, the size of the used storage space is negatively correlated with the second threshold in the function relationship between the size of the used storage space and the second threshold.

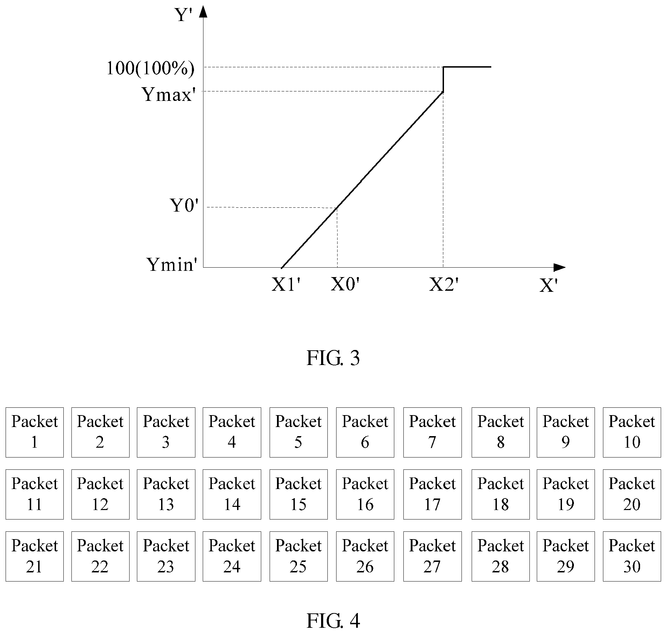

Preferably, in this embodiment, in the function relationship between the size of the used storage space and the second threshold, the size of the used storage space is positively correlated with the second threshold. In this case, exemplarily, for a schematic diagram of the function relationship between the size of the used storage space and the second threshold, reference may be made to FIG. 3.

In FIG. 3, an abscissa X' represents a size of used storage space, an ordinate Y' represents a second threshold, X1' represents a first limit, X2' represents a second limit, and X0' represents a size of currently used storage space; Ymax' represents a maximum second threshold, Ymin' represent a minimum second threshold, and Y0' represents a current second threshold; the first limit X1' corresponds to the minimum second threshold Ymin' and the second limit X2' corresponds to the maximum second threshold Ymax'.

Exemplarily, if a random number of a data flow is a probability of randomly discarding the data flow, the maximum second threshold Ymax' may be 95%, and the minimum second threshold Ymin' may be 0.

Still exemplarily, if a random number of a data flow is expressed by a number within a value range from 0 to 100, the maximum second threshold Ymax' may be 95, and the minimum second threshold Ymin' may be 0.

Similarly, it should be noted that, the function relationship between the size of the used storage space and the second threshold in FIG. 3 is linear, which is only exemplary, or certainly, the function relationship may be nonlinear. No matter whether the function relationship is a linear relationship or a nonlinear relationship, in this embodiment, a slope of a curve Y'-X' is positive when the size of the currently used storage space X0' is between the first limit X1' and the second limit X2'.

(3) Determine, according to the random number of the data flow and the current second threshold, whether packet discarding processing needs to be performed on the packets in the .

In this step, if the current second threshold is a variable value, and the size of the used storage space is positively correlated with the second threshold in the function relationship between the size of the used storage space and the second threshold, preferably, this step may specifically include the following:

If the random number of the data flow is less than the current second threshold, it is determined that packet discarding processing needs to be performed on the packets in the data flow.

In this case, it may be determined that the data flow is a large data flow.

If the random number of the data flow is greater than the current second threshold, it is determined that packet discarding processing does not need to be performed on the packets in the data flow.

In this case, it may be determined that the data flow is a small data flow.

It should be noted that, when the size of the currently used storage space is between a first limit and a second limit, the network device may determine whether packet discarding processing needs to be performed on the packets that belong to the same data flow in the currently used storage space; certainly, other manners may also be used.

Preferably, when the size of the currently used storage space is between the first limit and the second limit, the network device determines whether packet discarding processing needs to be performed on the packets that belong to the same data flow in the currently used storage space.

In this case, if the first limit is zero, and the second limit is a fixed value that is less than or equal to a capacity of storage space of the network device, the network device only needs to determine, when the size of the currently used storage space is less than the second limit, whether packet discarding processing needs to be performed on the packets that belong to the same data flow in the currently used storage space.

If the first limit is a nonzero fixed value, and the second limit is a fixed value that is less than or equal to a capacity of storage space of the network device, the network device only need to determine, when the size of the currently used storage space is greater than the first limit and less than the second limit, whether packet discarding processing needs to be performed on the packets that belong to the same data flow in the currently used storage space.

S102. if packet discarding processing needs to be performed, the network device discards continuous M packets that belong to the same data flow, where $1 \leq M \leq N$.

In this step, preferably, the data flow is a Transmission Control Protocol (TCP) stream. In this case, this step may specifically be: if packet discarding processing needs to be performed, the network device discards continuous M packets that have continuous TCP serial numbers and that belong to the same TCP stream. In this case, M is positively correlated with the number N of packets that belong to the same TCP stream.

The TCP serial number refers to a sequence number of a packet in a TCP stream. The M packets that have continuous TCP serial numbers refer to M packets that have continuous sequence numbers in a TCP stream.

Exemplarily, assuming that M=3, if a TCP serial number of the first packet is 10235486, a TCP serial number of the second packet is 10235487, and a TCP serial number of the third packet is 10235488, the three packets are continuous.

Herein, that M is positively correlated with the number N of packets that belong to the same TCP stream means that, if the number N of packets that belong to the same TCP stream increases or decreases, the number M of packets that are discarded increases or decreases accordingly.

In the method for avoiding congestion on a network device according to this embodiment of the present invention, a network device determines, according to a size of currently used storage space, whether packet discarding processing needs to be performed on packets that belong to a same data flow, where there are N packets that belong to the same data flow, and $N \geq 2$; and if packet discarding processing needs to be performed, discards continuous M packets that belong to the same data

flow, where $1 \leq M \leq N$. Only each time continuous packet discarding occurs when the network device performs packet discarding processing on the packets that belong to the same data flow, a receive end notifies a transmit end that a packet discarding phenomenon occurs. In this case, a quantity of times for determining, by the transmit end, that congestion phenomena occur on the current network device is decreased, and a quantity of times for decreasing a quantity of packets to be sent is also decreased, thereby relieving a problem of a decrease in a throughput of a network device in the prior art caused when the network device performs, after receiving a series of packets, packet discarding processing on the series of packets in a manner of randomly and discretely discarding packets.

The method for avoiding congestion on a network device according to this embodiment of the present invention is described below in detail with reference to transmission scenarios of specific TCP streams.

In all embodiments of the present invention, used storage space of the network device may be expressed by a storage queue of the network device. Further, a length of the storage queue is expressed by a quantity of packets stored in the storage queue.

Referring to a schematic diagram of packets stored in a current storage queue shown in FIG. 4, it may be known that a length of a currently used storage queue of the network device is 30, that is, 30 packets are stored in the currently used storage queue, and the 30 packets are named a packet 1, a packet 2, ..., and a packet 30 in sequence. Further, it is assumed that a first limit is 20, a second limit is 120, and a capacity of storage queue of the network device is 150.

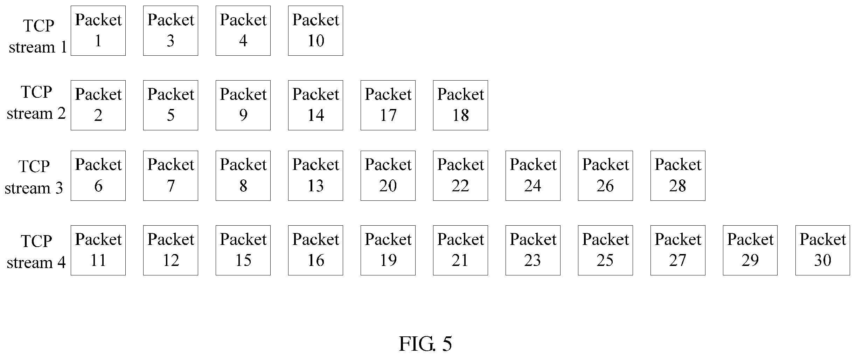

Referring to FIG. 5, in this case, the network device may determine, according to a difference in source IP addresses, destination IP addresses, protocol numbers, data flow source ports, or data flow destination ports of 30 packets stored in a current storage queue, that a packet 1, a packet 3, a packet 4, and a packet 10 belong to a TCP stream 1, a packet 2, a packet 5, a packet 9, a packet 14, a packet 17, and a packet 18 packet belong to a TCP stream 2, a packet 6, a packet 7, a packet 8, a packet 13, a packet 20, a packet 22, a packet 24, a packet 26, and a packet 28 belong to a TCP stream 3, and a packet 11, a packet 12, a packet 15, a packet 16, a packet 19, a packet 21, a packet 23, a packet 25, a packet 27, a packet 29, and a packet 30 belong to a TCP stream 4.

**Embodiment 1**

A method for avoiding congestion on a network device according to this embodiment includes the following steps:

Step 1. When a length of a currently used storage queue is between a first limit 20 and a second limit 120, a network device determines whether packet discarding processing needs to be performed on packets that belong to a same data flow in the currently used storage queue.

This step specifically includes the following:

(1) Acquire random numbers of packets in the foregoing four TCP streams.

Exemplarily, in this case, the random numbers of the packets in the foregoing four TCP streams are probabilities of randomly discarding the packets in the foregoing four TCP streams. Further, it is assumed that probabilities of randomly discarding the foregoing 30 packets are ai, where i represents a sequence number of a packet, and 1≤i≤30; and ai represents a probability of randomly discarding the i^th packet, and 0≤ai≤1.

(2) Determine a current first threshold.

Exemplarily, the current first threshold is a discarding probability currently set for the data flow, which may be called a first discarding probability in this embodiment.

In this case, referring to FIG. 2, it is assumed that a function relation of a length of a used storage queue and a first threshold is:

$$ Y = \begin{cases} 0.95 & 0 \le X < 20 \\ -0.009X + 1.13 & 20 \le X < 120 \\ 0 & 120 \le X < 150 \end{cases} . $$

Since X1=20, X2=120, and X0=30, it may be determined that a current first discarding probability is 86%.

(3) Determine, according to the random numbers of the 30 packets and the current first threshold, whether packet discarding processing needs to be performed on the packets in the four TCP streams.

Exemplarily, assuming that a sum of probabilities of randomly discarding all packets in the TCP stream 1 ∑ai (i=1, 3, 4, 10)<86%, it is determined that packet discarding processing does not need to be performed on four packets in the TCP stream 1.

In this case, the network device does not perform step 2.

Still exemplarily, assuming that a sum of probabilities of randomly discarding all packets in the TCP stream 2 ∑ai (i=2, 5, 9, 14, 17, and 18)<86%, it is determined that packet discarding processing does not need to be performed on six packets in the TCP stream 2.

In this case, the network device does not perform step 2.

Still exemplarily, assuming that a sum of probabilities of randomly discarding all packets in the TCP stream 3 ∑ai (i=6, 7, 8, 13, 20, 22, 24, 26, 28)>86%, it is determined that packet discarding processing needs to be performed on nine packets in the TCP stream 3.

In this case, the network device continues to perform step 2.

Still exemplarily, assuming that a sum of probabilities of randomly discarding all packets in the TCP stream 4 ∑ai (i=11, 12, 15, 16, 19, 21, 23, 25, 27, 29, and 30)>86%, it is determined that packet discarding processing needs to be performed on 11 packets in the TCP stream 4.

In this case, the network device continues to perform step 2.

Step 2. The network device discards continuous M1 packets in the TCP stream 3; the network device discards continuous M2 packets in the TCP stream 4, where 1≤M1≤9, and 1≤M2≤11.

Exemplarily, the network device discards two packets (the packet 6 and the packet 7) in the TCP stream 3, where TCP serial numbers of the packet 6 and the packet 7 are continuous.

Still exemplarily, the network device discards four packets (the packet 25, the packet 27, the packet 29, and the packet 30) in the TCP stream 4, where TCP serial numbers of the packet 25, the packet 27, the packet 29, and the packet 30 are continuous.

In the method for avoiding congestion on a network device according to this embodiment of the present invention, a network device determines, according to a size of currently used storage space, whether packet discarding processing needs to be performed on packets that belong to a same data flow, where there are N packets that belong to the same data flow, and N≥2; and if packet discarding processing needs to be performed, discards continuous M packets that belong to the same data flow, where 1≤M≤N. Only each time continuous packet discarding occurs when the network device performs packet discarding processing on the packets that belong to the same data flow, a receive end notifies a transmit end that a packet discarding phenomenon occurs. In this case, a quantity of times for determining, by the transmit end, that congestion phenomena occur on the current network device is decreased, and a quantity of times for decreasing a quantity of packets to be sent is also decreased, thereby relieving a problem of a decrease in a throughput of a network device in the prior art caused when the network device performs, after receiving a series of packets, packet discarding processing on the series of packets in a manner of randomly and discretely discarding packets.

**Embodiment 2**

In this embodiment, if a length of a current storage queue is between a first limit 20 and a second limit 120, the network device determines, in another manner, whether packet discarding processing needs to be performed on the packets in the foregoing four TCP streams. In this embodiment, only a difference from Embodiment 1 is listed. For other parts, reference may be made to the description in Embodiment 1, and details are not described herein again.

Specifically, an alternative step of step 1 of Embodiment 1 may be as follows:

Step 1. When a length of a currently used storage queue is between a first limit 20 and a second limit 120, a network device determines whether packet discarding processing needs to be performed on packets that belong to a same data flow in the currently used storage queue.

This step specifically includes the following:

(1) Acquire random numbers of the foregoing four TCP streams.

Exemplarily, in this case, the random numbers of the foregoing four TCP streams are probabilities of randomly discarding the foregoing four TCP streams. Further, it is assumed that the probabilities of randomly discarding the foregoing four TCP streams are bi, where i represents a sequence number of a TCP stream, and $1 \leq i \leq 4$; and bi represents a probability of randomly discarding the $i^{th}$ TCP stream, and $0 \leq bi \leq 1$.

(2) Determine a current second threshold.

Exemplarily, the current second threshold is a discarding probability currently set for the data flow, which may be called a second discarding probability in this embodiment.

In this case, referring to FIG. 3, it is assumed that a function relation of a length of a used storage queue and a second threshold is:

$$Y' = \begin{cases} 0 & 0 \leq X' < 20 \\ 0.0095X' - 0.19 & 20 \leq X' < 120 \\ 1 & 120 \leq X' < 150 \end{cases}.$$

Since X1'=20, X2'=120, and X0'=30, it may be determined that a current second discarding probability is 9.5%.

(3) Determine, according to the random numbers of the foregoing four TCP streams and the current second threshold, whether packet discarding processing needs to be performed on the packets in the four TCP streams.

Exemplarily, assuming that a probability of randomly discarding the TCP stream 1 b1>9.5%, it is determined that packet discarding processing does not need to be performed on four packets in the TCP stream 1.

Still exemplarily, assuming that a probability of randomly discarding the TCP stream 2 b2>9.5%, it is determined that packet discarding processing does not need to be performed on six packets in the TCP stream 2.

Still exemplarily, assuming that a probability of randomly discarding the TCP stream 3 b3<9.5%, it is determined that packet discarding processing needs to be performed on nine packets in the TCP stream 3.

Still exemplarily, assuming that a probability of randomly discarding the TCP stream 4 b4<9.5%, it is determined that packet discarding processing needs to be performed on 11 packets in the TCP stream 4.

In the method for avoiding congestion on a network device according to this embodiment of the present invention, a network device determines, according to a size of currently used storage space, whether packet discarding processing needs to be performed on packets that belong to a same data flow, where there are N packets that belong to the same data flow, and $N \geq 2$; and if packet discarding processing needs to be performed, discards continuous M packets that belong to the same data flow, where $1 \leq M \leq N$. Only each time continuous packet discarding occurs when the network device performs packet discarding processing on the packets that belong to the same data flow, a receive end notifies a transmit end that a packet discarding phenomenon occurs. In this case, a quantity of times for determining, by the transmit end, that congestion phenomena occur on the current network device is decreased, and a quantity of times for decreasing a quantity of packets to be sent is also decreased, thereby relieving a problem of a decrease in a throughput of a network device in the prior art caused when the network device performs, after receiving a series of packets, packet discarding processing on the series of packets in a manner of randomly and discretely discarding packets.

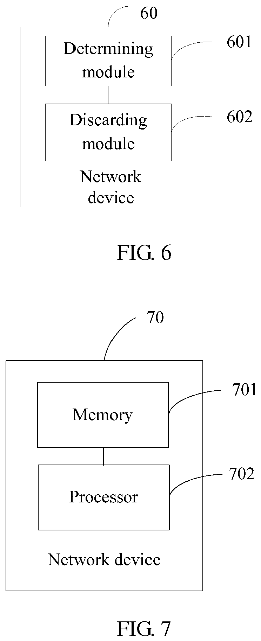

Referring to FIG. 6, an embodiment of the present invention provides a network device 60, where the network device 60 includes:

a determining module 601, configured to determine, according to a size of currently used storage space, whether packet discarding processing needs to be performed on packets that belong to a same data flow in the currently used storage space, where there are N packets that belong to the same data flow, and $N \geq 2$; and

a discarding module 602, configured to discard, if the determining module 601 determines that packet discarding processing needs to be performed, continuous M packets that belong to the same data flow, where $1 \leq M \leq N$.

Optionally, the determining module 601 includes:

a first acquiring unit, configured to acquire random numbers of the N packets that belong to the same data flow;

a first determining unit, configured to determine a current first threshold, where the first threshold is a critical value for determining whether packet discarding occurs in the data flow; and

a second determining unit, configured to determine, according to the random numbers of the N packets acquired by the first acquiring unit and the current first threshold determined by the first determining unit, whether packet discarding processing needs to be performed on the packets that belong to the same data flow in the currently used storage space.

Optionally, the determining module 601 is configured to: when the size of the currently used storage space is between a first limit and a second limit, determine whether packet discarding processing needs to be performed on the packets that belong to the same data flow in the currently used storage space, where the first limit is less than the second limit, and the second limit is less than or equal to a capacity of storage space of the network device.

The first determining unit is configured to determine the current first threshold according to the size of the currently used storage space and a function relationship between a size of used storage space and a first threshold, where in the function relationship between the size of the used storage space and the first threshold, one of the first limit and the second limit corresponds to a maximum first threshold, and the other thereof corresponds to a minimum first threshold.

Optionally, in the function relationship between the size of the used storage space and the first threshold, the size of the used storage space is negatively correlated with the first threshold.

The second determining unit is configured to: if a sum of the random numbers of the N packets is less than the current first threshold, determine that packet discarding processing does not need to be performed on the packets that belong to the same data flow; and if the sum of the random numbers of the N packets is greater than the current first threshold, determine that packet discarding processing needs to be performed on the packets that belong to the same data flow.

Optionally, the determining module 601 includes:

a second acquiring unit, configured to acquire a random number of the data flow;
a third determining unit, configured to determine a current second threshold, where the second threshold is a critical value for determining whether packet discarding occurs in a data flow; and
a fourth determining unit, configured to determine, according to the random number of the data flow acquired by the second acquiring unit and the current second threshold determined by the third determining unit, whether packet discarding processing needs to be performed on the packets in the data flow.

Optionally, the determining module 601 is configured to: when the size of the currently used storage space is between a first limit and a second limit, determine whether packet discarding processing needs to be performed on the packets that belong to the same data flow in the currently used storage space, where the first limit is less than the second limit, and the second limit is less than or equal to a capacity of storage space of the network device.

The third determining unit is configured to determine the current second threshold according to the size of the currently used storage space and a function relationship between a size of used storage space and a second threshold, where in the function relationship between the size of the used storage space and the second threshold, one of the first limit and the second limit corresponds to a minimum second threshold, and the other thereof corresponds to a maximum second threshold.

Optionally, in the function relationship between the size of the used storage space and the second threshold, the size of the used storage space is positively correlated with the second threshold.

The fourth determining unit is configured to: if the random number of the data flow is less than the current second threshold, determine that packet discarding processing needs to be performed on the packets in the data flow; and if the random number of the data flow is greater than the current second threshold, determine that packet discarding processing does not need to be performed on the packets in the data flow.

Optionally, the data flow is a TCP stream.

The discarding continuous M packets that belong to the same data flow includes: discarding M packets that have continuous TCP serial numbers and that belong to the same TCP stream.

According to the network device 60 provided in this embodiment of the present invention, a determining module 601 determines, according to a size of currently used storage space, whether packet discarding processing needs to be performed on packets that belong to a same data flow, where there are N packets that belong to the same data flow, and N≥2; and if packet discarding processing needs to be performed, a discarding module 602 discards continuous M packets that belong to the same data flow, where 1≤M≤N. Only each time continuous packet discarding occurs when the network device performs packet discarding processing on the packets that belong to the same data flow, a receive end notifies a transmit end that a packet discarding phenomenon occurs. In this case, a quantity of times for determining, by the transmit end, that congestion phenomena occur on the current network device is decreased, and a quantity of times for decreasing a quantity of packets to be sent is also decreased, thereby relieving a problem of a decrease in a throughput of a network device in the prior art caused when the network device performs, after receiving a series of packets, packet discarding processing on the series of packets in a manner of randomly and discretely discarding packets.

Referring to FIG. 7, an embodiment of the present invention further provides a network device 70, where the network device 70 includes: a memory 701 and a processor 702 connected to the memory 701.

The memory 701 is configured to store a received packet.

The processor 702 is configured to determine, according to a size of currently used storage space in the memory 701, whether packet discarding processing needs to be performed on packets that belong to a same data flow in the currently used storage space, where there are N packets that belong to the same data flow, and N≥2.

The processor 702 is further configured to discard, if packet discarding processing needs to be performed, continuous M packets that belong to the same data flow, where 1≤M≤N.

Optionally, the processor 702 is specifically configured to acquire random numbers of the N packets that belong to the same data flow; determine a current first threshold; determine, according to the random numbers of the N packets and the current first threshold, whether packet discarding processing needs to be performed on the packets that belong to the same data flow in the currently used storage space, where the first threshold is a critical value for determining whether packet discarding occurs in the data flow.

Optionally, the processor 702 is specifically configured to: when the size of the currently used storage space is between a first limit and a second limit, determine whether packet discarding processing needs to be performed on the packets that belong to the same data flow in the currently used storage space, where the first limit is less than the second limit, and the second limit is less than or equal to a capacity of storage space of the network device.

The processor 702 is specifically configured to determine the current first threshold according to the size of the currently used storage space and a function relationship between a size of used storage space and a first threshold, where in the function relationship between the size of the used storage space and the first threshold, one of the first limit and the second limit corresponds to a maximum first threshold, and the other thereof corresponds to a minimum first threshold.

Optionally, in the function relationship between the size of the used storage space and the first threshold, the size of the used storage space is negatively correlated with the first threshold.

The processor 702 is specifically configured to: if a sum of the random numbers of the N packets is less than the current first threshold, determine that packet discarding processing does not need to be performed on the packets that belong to the same data flow; and if the sum of the random numbers of the N packets is greater than the current first threshold, determine that packet discarding processing needs to be performed on the packets that belong to the same data flow.

Optionally, the processor 702 is specifically configured to acquire a random number of the data flow; determine a current second threshold; determine, according to the random number of the data flow and the current second threshold, whether packet discarding processing needs to be performed on the packets in the data flow, where the second threshold is a critical value for determining whether packet discarding occurs in the data flow.

Optionally, the processor 702 is specifically configured to: when the size of the currently used storage space is between a first limit and a second limit, determine whether packet discarding processing needs to be performed on the packets that belong to the same data flow in the currently used storage space, where the first limit is less than the second limit, and the second limit is less than or equal to a capacity of storage space of the network device.

The processor 702 is specifically configured to determine the current second threshold according to the size of the currently used storage space and a function relationship between a size of used storage space and a second threshold, where in the function relationship between the size of the used storage space and the second threshold, one of the first limit and the second limit corresponds to a minimum second threshold, and the other thereof corresponds to a maximum second threshold.

Optionally, in the function relationship between the size of the used storage space and the second threshold, the size of the used storage space is positively correlated with the second threshold.

The processor 702 is specifically configured to: if the random number of the data flow is less than the current second threshold, determine that packet discarding processing needs to be performed on the packets in the data flow; and if the random number of the data flow is greater than the current second threshold, determine that packet discarding processing does not need to be performed on the packets in the data flow.

Optionally, the data flow is a TCP stream.

The discarding continuous M packets that belong to the same data flow includes: discarding M packets that have continuous TCP serial numbers and that belong to the same TCP stream.

According to the network device 70 provided in this embodiment of the present invention, a processor 702 determines, according to a size of currently used storage space in a memory 701, whether packet discarding processing needs to be performed on packets that belong to a same data flow, where there are N packets that belong to the same data flow, and N≥2; and if packet discarding processing needs to be performed, discards continuous M packets that belong to the same data flow, where 1≤M≤N. Only each time continuous packet discarding occurs when the network device performs packet discarding processing on the packets that belong to the same data flow, a receive end notifies a transmit end that a packet discarding phenomenon occurs. In this case, a quantity of times for determining, by the transmit end, that congestion phenomena occur on the current network device is decreased, and a quantity of times for decreasing a quantity of packets to be sent is also decreased, thereby relieving a problem of a decrease in a throughput of a network device in the prior art caused when the network device performs, after receiving a series of packets, packet discarding processing on the series of packets in a manner of randomly and discretely discarding packets.

In the several embodiments provided in the present application, it should be understood that, the disclosed system, device, and method may be implemented in other manners. For example, the apparatus embodiments described above are merely exemplary. For example, the unit division is merely logic function division and may be other division in actual implementation. For example, a plurality of units or components may be combined or integrated to another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be separated physically, and parts displayed as units may or may not be physical units, may be located in one position, or may be distributed on a plurality of network units. Some or all of the units may be selected to according to actual needs to achieve the objectives of the solutions of the embodiments.

In addition, functional units in the embodiments of the present invention may be integrated into one processing unit, or each of the units may exist alone physically, or two or more units may be integrated into one unit. The foregoing integrated unit may be implemented in a hardware form, or may be implemented in a form of hardware and software functional units.

The foregoing integrated unit implemented in a form of a software functional unit may be stored in a computer-readable storage medium. The foregoing software functional unit is stored in a storage medium and includes several instructions for instructing a computer device (which may be a personnel computer, a server, a network device, or the like) to execute some of the steps of the methods in the embodiments of the present invention. The foregoing storage medium includes various kinds of media that can store program code, such as a USB flash drive, a removable hard disk, a read-only memory (ROM), a random access memory (RAM), a magnetic disk, or an optical disc.

Finally, it should be noted that, the foregoing embodiments are merely intended for describing the technical solutions of the present invention, but not for limiting the present invention. Although the present invention has been described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

**Claims**

1. A method for avoiding congestion on a network device, comprising:

   determining (S101), by the network device according to a size of a currently used storage space, whether packet discarding processing needs to be performed on packets that belong to the same data flow in the currently used storage space, wherein there are N packets that belong to the same data flow, and N≥2; and
   when packet discarding processing needs to be performed, discarding (S102), by the network device, continuous M packets that belong to the same data flow, wherein 1<M≤N,
   wherein the data flow is a Transmission Control Protocol, TCP, stream; and
   the discarding continuous M packets that belong to the same data flow comprises: discarding M packets that have continuous TCP serial numbers and that belong to the same TCP stream.

2. The method according to claim 1, wherein the determining (S101) whether packet discarding processing needs to be performed on packets that belong to a same data flow in the currently used storage space comprises:

   acquiring random numbers of the N packets that belong to the same data flow;
   determining a current first threshold, wherein the current first threshold is a critical value for determining whether packet discarding occurs in the data flow; and
   determining, according to the random numbers of the N packets and the current first threshold, whether packet discarding processing needs to be performed on the packets that belong to the same data flow in the currently used storage space.

3. The method according to claim 2, wherein the determining, by a network device according to a size of currently used storage space, whether packet discarding processing needs to be performed on packets that belong to a same data flow in the currently used storage space comprises:

   when the size of the currently used storage space is between a first limit and a second limit, determining, by the network device, whether packet discarding processing needs to be performed on the packets that belong to the same data flow in the currently used storage space, wherein the first limit is less than the second limit, and the second limit is less than or equal to a capacity of storage space of the network device; and

the determining a current first threshold comprises:

> determining the current first threshold according to the size of the currently used storage space and a function relationship between a size of used storage space and a first threshold, wherein in the function relationship between the size of the used storage space and the first threshold, one of the first limit and the second limit corresponds to a maximum first threshold, and the other thereof corresponds to a minimum first threshold.

4. The method according to claim 3, wherein in the function relationship between the size of the used storage space and the first threshold, the size of the used storage space is negatively correlated with the first threshold; and

the determining, according to the random numbers of the N packets and the current first threshold, whether packet discarding processing needs to be performed on the packets that belong to the same data flow comprises:

> when a sum of the random numbers of the N packets is less than the current first threshold, determining that packet discarding processing does not need to be performed on the packets that belong to the same data flow; and
> when the sum of the random numbers of the N packets is greater than the current first threshold, determining that packet discarding processing needs to be performed on the packets that belong to the same data flow.

5. The method according to claim 1, wherein the determining (S101) whether packet discarding processing needs to be performed on packets that belong to a same data flow in the currently used storage space comprises:

> acquiring a random number of the data flow;
> determining a current second threshold, wherein the current second threshold is a critical value for determining whether packet discarding occurs in the data flow; and
> determining, according to the random number of the data flow and the current second threshold, whether packet discarding processing needs to be performed on the packets in the data flow.

6. The method according to claim 5, wherein the determining, by a network device according to a size of currently used storage space, whether packet discarding processing needs to be performed on packets that belong to a same data flow in the currently used storage space comprises:

> when the size of the currently used storage space is between a first limit and a second limit, determining, by the network device, whether packet discarding processing needs to be performed on the packets that belong to the same data flow in the currently used storage space, wherein the first limit is less than the second limit, and the second limit is less than or equal to a capacity of storage space of the network device; and
> the determining a current second threshold comprises:

> > determining the current second threshold according to the size of the currently used storage space and a function relationship between a size of used storage space and a second threshold, wherein in the function relationship between the size of the used storage space and the second threshold, one of the first limit and the second limit corresponds to a minimum second threshold, and the other thereof corresponds to a maximum second threshold.

7. The method according to claim 6, wherein in the function relationship between the size of the used storage space and the second threshold, the size of the used storage space is positively correlated with the second threshold; and

the determining, according to the random number of the data flow and the current second threshold, whether packet discarding processing needs to be performed on the packets in the data flow comprises:

> when the random number of the data flow is less than the current second threshold, determining that packet discarding processing needs to be performed on the packets in the data flow; and
> when the random number of the data flow is greater than the current second threshold, determining that packet discarding processing does not need to be performed on the packets in the data flow.

8. A network device (60), comprising:

a determining module (601), configured to determine, according to a size of currently used storage space, whether packet discarding processing needs to be performed on packets that belong to the same data flow in the currently used storage space, wherein there are N packets that belong to the same data flow, and N≥2; and

a discarding module (602), configured to discard, when the determining module (601) determines that packet discarding processing needs to be performed, continuous M packets that belong to the same data flow, wherein 1<M≤N, wherein the data flow is a Transmission Control Protocol, TCP, stream; and

the discarding continuous M packets that belong to the same data flow comprises: discarding M packets that have continuous TCP serial numbers and that belong to the same TCP stream.

9. The network device (60) according to claim 8, wherein the determining module (601) comprises:

  a first acquiring unit, configured to acquire random numbers of the N packets that belong to the same data flow;

  a first determining unit, configured to determine a current first threshold, wherein the current first threshold is a critical value for determining whether packet discarding occurs in the data flow; and

  a second determining unit, configured to determine, according to the random numbers of the N packets acquired by the first acquiring unit and the current first threshold determined by the first determining unit, whether packet discarding processing needs to be performed on the packets that belong to the same data flow in the currently used storage space.

10. The network device (60) according to claim 9, wherein the determining module (601) is configured to: when the size of the currently used storage space is between a first limit and a second limit, determine whether packet discarding processing needs to be performed on the packets that belong to the same data flow in the currently used storage space, wherein the first limit is less than the second limit, and the second limit is less than or equal to a capacity of storage space of the network device; and the first determining unit is configured to determine the current first threshold according to the size of the currently used storage space and a function relationship between a size of used storage space and a first threshold, wherein in the function relationship between the size of the used storage space and the first threshold, one of the first limit and the second limit corresponds to a maximum first threshold, and the other thereof corresponds to a minimum first threshold.

11. The network device (60) according to claim 10, wherein in the function relationship between the size of the used storage space and the first threshold, the size of the used storage space is negatively correlated with the first threshold; and

the second determining unit is configured to: when a sum of the random numbers of the N packets is less than the current first threshold, determine that packet discarding processing does not need to be performed on the packets that belong to the same data flow; and when the sum of the random numbers of the N packets is greater than the current first threshold, determine that packet discarding processing needs to be performed on the packets that belong to the same data flow.

12. The network device (60) according to claim 8, wherein the determining module (601) comprises:

  a second acquiring unit, configured to acquire a random number of the data flow;

  a third determining unit, configured to determine a current second threshold, wherein the current second threshold is a critical value for determining whether packet discarding occurs in the data flow; and

  a fourth determining unit, configured to determine, according to the random number of the data flow acquired by the second acquiring unit and the current second threshold determined by the third determining unit, whether packet discarding processing needs to be performed on the packets in the data flow.

13. The network device (60) according to claim 12, wherein the determining module (601) is configured to: when the size of the currently used storage space is between a first limit and a second limit, determine whether packet discarding processing needs to be performed on the packets that belong to the same data flow in the currently used storage space, wherein the first limit is less than the second limit, and the second limit is less than or equal to a capacity of storage space of the network device; and

the third determining unit is configured to determine the current second threshold according to the size of the currently used storage space and a function relationship between a size of used storage space and a second threshold, wherein in the function relationship between the size of the used storage space and the second threshold, one of the first limit and the second limit corresponds to a minimum second threshold, and the other thereof corresponds to a maximum second threshold.

**14.** The network device (60) according to claim 13, wherein in the function relationship between the size of the used storage space and the second threshold, the size of the used storage space is positively correlated with the second threshold; and
the fourth determining unit is configured to: when the random number of the data flow is less than the current second threshold, determine that packet discarding processing needs to be performed on the packets in the data flow; and when the random number of the data flow is greater than the current second threshold, determine that packet discarding processing does not need to be performed on the packets in the data flow.

**Patentansprüche**

**1.** Verfahren zur Vermeidung von Überlastung an einer Netzwerkvorrichtung, umfassend: Bestimmen (S101), durch die Netzwerkvorrichtung, gemäß einer Größe eines aktuell genutzten Speicherplatzes, ob eine Paketverwerfungsverarbeitung an Paketen durchgeführt werden muss, die zu demselben Datenfluss in dem aktuell genutzten Speicherplatz gehören, wobei N Pakete vorliegen, die zu demselben Datenfluss gehören, und $N \geq 2$; und wenn eine Paketverwerfungsverarbeitung durchgeführt werden muss, Verwerfen (S102), durch die Netzwerkvorrichtung, von kontinuierlichen M Paketen, die zu demselben Datenfluss gehören, wobei $1 < M \leq N$, wobei der Datenfluss ein Übertragungssteuerungsprotokoll-, TCP-, Strom ist; und das Verwerfen kontinuierlicher M Pakete, die zu demselben Datenfluss gehören, Folgendes umfasst:

Verwerfen von M Paketen, die kontinuierliche TCP-Seriennummern aufweisen und die zu demselben TCP-Strom gehören.

**2.** Verfahren nach Anspruch 1, wobei das Bestimmen (S101), ob eine Paketverwerfungsverarbeitung an Paketen durchgeführt werden muss, die zu einem selben Datenfluss in dem aktuell genutzten Speicherplatz gehören, Folgendes umfasst:

Erfassen von Zufallszahlen der N Pakete, die zu demselben Datenfluss gehören; Bestimmen einer aktuellen ersten Schwelle, wobei die aktuelle erste Schwelle ein kritischer Wert zum Bestimmen, ob eine Paketverwerfung in dem Datenfluss erfolgt, ist; und Bestimmen, gemäß den Zufallszahlen der N Pakete und der aktuellen ersten Schwelle, ob eine Paketverwerfungsverarbeitung an den Paketen durchgeführt werden muss, die zu demselben Datenfluss in dem aktuell genutzten Speicherplatz gehören.

**3.** Verfahren nach Anspruch 2, wobei das Bestimmen, durch eine Netzwerkvorrichtung gemäß einer Größe eines aktuell genutzten Speicherplatzes, ob eine Paketverwerfungsverarbeitung an Paketen durchgeführt werden muss, die zu einem selben Datenfluss in dem aktuell genutzten Speicherplatz gehören, Folgendes umfasst:

wenn die Größe des aktuell genutzten Speicherplatzes zwischen einem ersten Grenzwert und einem zweiten Grenzwert liegt, Bestimmen, durch die Netzwerkvorrichtung, ob eine Paketverwerfungsverarbeitung an den Paketen durchgeführt werden muss, die zu demselben Datenfluss in dem aktuell genutzten Speicherplatz gehören, wobei der erste Grenzwert kleiner als der zweite Grenzwert ist und der zweite Grenzwert kleiner als eine Speicherplatzkapazität der Netzwerkvorrichtung oder gleich dieser ist; und
das Bestimmen einer aktuellen ersten Schwelle Folgendes umfasst:

Bestimmen der aktuellen ersten Schwelle gemäß der Größe des aktuell genutzten Speicherplatzes und einer Funktionsbeziehung zwischen einer Größe genutzten Speicherplatzes und einer ersten Schwelle, wobei in der Funktionsbeziehung zwischen der Größe des genutzten Speicherplatzes und der ersten Schwelle einer von dem ersten Grenzwert und dem zweiten Grenzwert einer maximalen ersten Schwelle entspricht und der andere davon einer minimalen ersten Schwelle entspricht.

**4.** Verfahren nach Anspruch 3, wobei in der Funktionsbeziehung zwischen der Größe des genutzten Speicherplatzes und der ersten Schwelle die Größe des genutzten Speicherplatzes negativ mit der ersten Schwelle korreliert ist; und
das Bestimmen, gemäß den Zufallszahlen der N Pakete und der aktuellen ersten Schwelle, ob eine Paketverwerfungsverarbeitung an den Paketen durchgeführt werden muss, die zu demselben Datenfluss gehören, Folgendes umfasst: wenn eine Summe der Zufallszahlen der N Pakete kleiner als die aktuelle erste Schwelle ist, Bestimmen, dass eine Paketverwerfungsverarbeitung an den Paketen, die zu demselben Datenfluss gehören, nicht durchgeführt werden muss; und
wenn die Summe der Zufallszahlen der N Pakete größer als die aktuelle erste Schwelle ist, Bestimmen, dass eine Paketverwerfungsverarbeitung an den Paketen, die zu demselben Datenfluss gehören, durchgeführt werden muss.

**5.** Verfahren nach Anspruch 1, wobei das Bestimmen

27      **EP 3 086 518 B1**      28

(S101), ob eine Paketverwerfungsverarbeitung an Paketen durchgeführt werden muss, die zu einem selben Datenfluss in dem aktuell genutzten Speicherplatz gehören, Folgendes umfasst:

> Erfassen einer Zufallszahl des Datenflusses;
> Bestimmen einer aktuellen zweiten Schwelle, wobei die aktuelle zweite Schwelle ein kritischer Wert zum Bestimmen, ob eine Paketverwerfung in dem Datenfluss erfolgt, ist; und
> Bestimmen, gemäß der Zufallszahl des Datenflusses und der aktuellen zweiten Schwelle, ob eine Paketverwerfungsverarbeitung an den Paketen in dem Datenfluss durchgeführt werden muss.

6. Verfahren nach Anspruch 5, wobei das Bestimmen, durch eine Netzwerkvorrichtung gemäß einer Größe eines aktuell genutzten Speicherplatzes, ob eine Paketverwerfungsverarbeitung an Paketen durchgeführt werden muss, die zu einem selben Datenfluss in dem aktuell genutzten Speicherplatz gehören, Folgendes umfasst:

> wenn die Größe des aktuell genutzten Speicherplatzes zwischen einem ersten Grenzwert und einem zweiten Grenzwert liegt, Bestimmen, durch die Netzwerkvorrichtung, ob eine Paketverwerfungsverarbeitung an den Paketen durchgeführt werden muss, die zu demselben Datenfluss in dem aktuell genutzten Speicherplatz gehören, wobei der erste Grenzwert kleiner als der zweite Grenzwert ist und der zweite Grenzwert kleiner als eine Speicherplatzkapazität der Netzwerkvorrichtung oder gleich dieser ist; und
> das Bestimmen einer aktuellen zweiten Schwelle Folgendes umfasst:
>
>> Bestimmen der aktuellen zweiten Schwelle gemäß der Größe des aktuell genutzten Speicherplatzes und einer Funktionsbeziehung zwischen einer Größe genutzten Speicherplatzes und einer zweiten Schwelle, wobei in der Funktionsbeziehung zwischen der Größe des genutzten Speicherplatzes und der zweiten Schwelle einer von dem ersten Grenzwert und dem zweiten Grenzwert einer minimalen zweiten Schwelle entspricht und der andere davon einer maximalen zweiten Schwelle entspricht.

7. Verfahren nach Anspruch 6, wobei in der Funktionsbeziehung zwischen der Größe des genutzten Speicherplatzes und der zweiten Schwelle die Größe des genutzten Speicherplatzes positiv mit der zweiten Schwelle korreliert ist; und

das Bestimmen, gemäß der Zufallszahl des Datenflusses und der aktuellen zweiten Schwelle, ob eine Paketverwerfungsverarbeitung an den Paketen in dem Datenfluss durchgeführt werden muss, Folgendes umfasst:

> wenn die Zufallszahl des Datenflusses kleiner als die aktuelle zweite Schwelle ist, Bestimmen, dass eine Paketverwerfungsverarbeitung an den Paketen in dem Datenfluss durchgeführt werden muss; und wenn die Zufallszahl des Datenflusses größer als die aktuelle zweite Schwelle ist,
> Bestimmen, dass eine Paketverwerfungsverarbeitung an den Paketen in dem Datenfluss nicht durchgeführt werden muss.

8. Netzwerkvorrichtung (60), umfassend:

> ein Bestimmungsmodul (601), das konfiguriert ist, gemäß einer Größe eines aktuell genutzten Speicherplatzes zu bestimmen, ob eine Paketverwerfungsverarbeitung an Paketen durchgeführt werden muss, die zu demselben Datenfluss in dem aktuell genutzten Speicherplatz gehören, wobei N Pakete vorliegen, die zu demselben Datenfluss gehören, und $N \geq 2$; und
> ein Verwerfungsmodul (602), das konfiguriert ist, wenn das Bestimmungsmodul (601) bestimmt, dass eine Paketverwerfungsverarbeitung durchgeführt werden muss, kontinuierliche M Pakete zu verwerfen, die zu demselben Datenfluss gehören, wobei $1 < M \leq N$;
> wobei der Datenfluss ein Übertragungssteuerungsprotokoll-, TCP-, Strom ist; und
> das Verwerfen kontinuierlicher M Pakete, die zu demselben Datenfluss gehören, Folgendes umfasst:
>
>> Verwerfen von M Paketen, die kontinuierliche TCP-Seriennummern aufweisen und die zu demselben TCP-Strom gehören.

9. Netzwerkvorrichtung (60) nach Anspruch 8, wobei das Bestimmungsmodul (601) Folgendes umfasst:

> eine erste Erfassungseinheit, die konfiguriert ist, Zufallszahlen der N Pakete zu erfassen, die zu demselben Datenfluss gehören;
> eine erste Bestimmungseinheit, die konfiguriert ist, eine aktuelle erste Schwelle zu bestimmen, wobei die aktuelle erste Schwelle ein kritischer Wert zum Bestimmen, ob eine Paketverwerfung in dem Datenfluss erfolgt, ist; und
> eine zweite Bestimmungseinheit, die konfiguriert ist, gemäß den Zufallszahlen der N Pakete, die von der ersten Erfassungseinheit erfasst werden, und der aktuellen ersten Schwelle, die

15

von der ersten Bestimmungseinheit bestimmt wird, zu bestimmen, ob eine Paketverwerfungsverarbeitung an den Paketen durchgeführt werden muss, die zu demselben Datenfluss in dem aktuell genutzten Speicherplatz gehören.

10. Netzwerkvorrichtung (60) nach Anspruch 9, wobei das Bestimmungsmodul (601) konfiguriert ist: wenn die Größe des aktuell genutzten Speicherplatzes zwischen einem ersten Grenzwert und einem zweiten Grenzwert liegt, zu bestimmen, ob eine Paketverwerfungsverarbeitung an den Paketen durchgeführt werden muss, die zu demselben Datenfluss in dem aktuell genutzten Speicherplatz gehören, wobei der erste Grenzwert kleiner als der zweite Grenzwert ist und der zweite Grenzwert kleiner als eine Speicherplatzkapazität der Netzwerkvorrichtung oder gleich dieser ist; und

die erste Bestimmungseinheit konfiguriert ist, die aktuelle erste Schwelle gemäß der Größe des aktuell genutzten Speicherplatzes und einer Funktionsbeziehung zwischen einer Größe genutzten Speicherplatzes und einer ersten Schwelle zu bestimmen, wobei in der Funktionsbeziehung zwischen der Größe des genutzten Speicherplatzes und der ersten Schwelle einer von dem ersten Grenzwert und dem zweiten Grenzwert einer maximalen ersten Schwelle entspricht und der andere davon einer minimalen ersten Schwelle entspricht.

11. Netzwerkvorrichtung (60) nach Anspruch 10, wobei in der Funktionsbeziehung zwischen der Größe des genutzten Speicherplatzes und der ersten Schwelle die Größe des genutzten Speicherplatzes negativ mit der ersten Schwelle korreliert ist; und die zweite Bestimmungseinheit konfiguriert ist: wenn eine Summe der Zufallszahlen der N Pakete kleiner als die aktuelle erste Schwelle ist, zu bestimmen, dass eine Paketverwerfungsverarbeitung an den Paketen, die zu demselben Datenfluss gehören, nicht durchgeführt werden muss; und wenn die Summe der Zufallszahlen der N Pakete größer als die aktuelle erste Schwelle ist, zu bestimmen, dass eine Paketverwerfungsverarbeitung an den Paketen, die zu demselben Datenfluss gehören, durchgeführt werden muss.

12. Netzwerkvorrichtung (60) nach Anspruch 8, wobei das Bestimmungsmodul (601) Folgendes umfasst:

eine zweite Erfassungseinheit, die konfiguriert ist, eine Zufallszahl des Datenflusses zu erfassen;
eine dritte Bestimmungseinheit, die konfiguriert ist, eine aktuelle zweite Schwelle zu bestimmen, wobei die aktuelle zweite Schwelle ein kritischer Wert zum Bestimmen, ob eine Paketverwerfung in dem Datenfluss erfolgt, ist; und

eine vierte Bestimmungseinheit, die konfiguriert ist, gemäß der Zufallszahl des Datenflusses, die von der zweiten Erfassungseinheit erfasst wird, und der aktuellen zweite Schwelle, die von der dritten Bestimmungseinheit bestimmt wird, zu bestimmen, ob eine Paketverwerfungsverarbeitung an den Paketen in dem Datenfluss durchgeführt werden muss.

13. Netzwerkvorrichtung (60) nach Anspruch 12, wobei das Bestimmungsmodul (601) konfiguriert ist: wenn die Größe des aktuell genutzten Speicherplatzes zwischen einem ersten Grenzwert und einem zweiten Grenzwert liegt, zu bestimmen, ob eine Paketverwerfungsverarbeitung an den Paketen durchgeführt werden muss, die zu demselben Datenfluss in dem aktuell genutzten Speicherplatz gehören, wobei der erste Grenzwert kleiner als der zweite Grenzwert ist und der zweite Grenzwert kleiner als eine Speicherplatzkapazität der Netzwerkvorrichtung oder gleich dieser ist; und

die dritte Bestimmungseinheit konfiguriert ist, die aktuelle zweite Schwelle gemäß der Größe des aktuell genutzten Speicherplatzes und einer Funktionsbeziehung zwischen einer Größe genutzten Speicherplatzes und einer zweiten Schwelle zu bestimmen, wobei in der Funktionsbeziehung zwischen der Größe des genutzten Speicherplatzes und der zweiten Schwelle einer von dem ersten Grenzwert und dem zweiten Grenzwert einer minimalen zweiten Schwelle entspricht und der andere davon einer maximalen zweiten Schwelle entspricht.

14. Netzwerkvorrichtung (60) nach Anspruch 13, wobei in der Funktionsbeziehung zwischen der Größe des genutzten Speicherplatzes und der zweiten Schwelle die Größe des genutzten Speicherplatzes positiv mit der zweiten Schwelle korreliert ist; und
die vierte Bestimmungseinheit konfiguriert ist:

wenn die Zufallszahl des Datenflusses kleiner als die aktuelle zweite Schwelle ist, zu bestimmen, dass eine Paketverwerfungsverarbeitung an den Paketen in dem Datenfluss durchgeführt werden muss; und wenn die Zufallszahl des Datenflusses größer als die aktuelle zweite Schwelle ist, zu bestimmen, dass eine Paketverwerfungsverarbeitung an den Paketen in dem Datenfluss nicht durchgeführt werden muss.

**Revendications**

1. Procédé pour éviter un encombrement sur un dispositif de réseau, comprenant :

le fait de déterminer (S101), par le dispositif de réseau selon une taille d'un espace de stockage actuellement utilisé, si un traitement de rejet de paquet doit être réalisé sur des paquets qui appartiennent au même flot de données dans l'espace de stockage actuellement utilisé, dans lequel il y a N paquets qui appartiennent au même flot de données, et $N \geq 2$ ; et

lorsqu'un traitement de rejet de paquet doit être réalisé, le rejet (S102), par le dispositif de réseau, de M paquets continus qui appartiennent au même flot de données, dans lequel $1 < M \leq N$, dans lequel le flot de données est un flux de protocole de commande de transmission, TCP ; et

le rejet de M paquets continus qui appartiennent au même flot de données comprend : le rejet de M paquets qui ont des numéros de série TCP continus et qui appartiennent au même flux TCP.

2. Procédé selon la revendication 1, dans lequel le fait de déterminer (S101) si un traitement de rejet de paquet doit être réalisé sur des paquets qui appartiennent à un même flot de données dans l'espace de stockage actuellement utilisé comprend :

l'acquisition de nombres aléatoires des N paquets qui appartiennent au même flot de données ;

la détermination d'un premier seuil actuel, dans lequel le premier seuil actuel est une valeur critique pour déterminer si un rejet de paquet se produit dans le flot de données ; et

le fait de déterminer, selon les nombres aléatoires des N paquets et le premier seuil actuel, si un traitement de rejet de paquet doit être réalisé sur les paquets qui appartiennent au même flot de données dans l'espace de stockage actuellement utilisé.

3. Procédé selon la revendication 2, dans lequel le fait de déterminer, par un dispositif de réseau, selon une taille d'espace de stockage actuellement utilisé, si un traitement de rejet de paquet doit être réalisé sur des paquets qui appartiennent à un même flot de données dans l'espace de stockage actuellement utilisé comprend :

lorsque la taille de l'espace de stockage actuellement utilisé est entre une première limite et une seconde limite, le fait de déterminer, par le dispositif de réseau, si un traitement de rejet de paquet doit être réalisé sur les paquets qui appartiennent au même flot de données dans l'espace de stockage actuellement utilisé, dans lequel la première limite est inférieure à la seconde limite, et la seconde limite est inférieure ou égale à une capacité d'espace de stockage du dispositif de réseau ; et

la détermination d'un premier seuil actuel comprend :

la détermination du premier seuil actuel selon la taille de l'espace de stockage actuellement utilisé et une relation de fonction entre une taille d'espace de stockage utilisé et un premier seuil, dans lequel dans la relation de fonction entre la taille de l'espace de stockage utilisé et le premier seuil, l'une de la première limite et de la seconde limite correspond à un premier seuil maximal, et l'autre correspond à un premier seuil minimal.

4. Procédé selon la revendication 3, dans lequel dans la relation de fonction entre la taille de l'espace de stockage utilisé et le premier seuil, la taille de l'espace de stockage utilisé est corrélée négativement avec le premier seuil ; et

le fait de déterminer, selon les nombres aléatoires des N paquets et le premier seuil actuel, si un traitement de rejet de paquet doit être réalisé sur les paquets qui appartiennent au même flot de données comprend :

lorsqu'une somme des nombres aléatoires des N paquets est inférieure au premier seuil actuel, la détermination qu'un traitement de rejet de paquet ne doit pas être réalisé sur les paquets qui appartiennent au même flot de données ; et

lorsque la somme des nombres aléatoires des N paquets est supérieure au premier seuil actuel, la détermination que le traitement de rejet de paquet doit être réalisé sur les paquets qui appartiennent au même flot de données.

5. Procédé selon la revendication 1, dans lequel le fait de déterminer (S101) si un traitement de rejet de paquet doit être réalisé sur des paquets qui appartiennent à un même flot de données dans l'espace de stockage actuellement utilisé comprend :

l'acquisition d'un nombre aléatoire du flot de données ;

la détermination d'un second seuil actuel, dans lequel le second seuil actuel est une valeur critique pour déterminer si un rejet de paquet se produit dans le flot de données ; et

le fait de déterminer, selon le nombre aléatoire du flot de données et le second seuil actuel, si un traitement de rejet de paquet doit être réalisé sur les paquets dans le flot de données.

6. Procédé selon la revendication 5, dans lequel le fait de déterminer, par un dispositif de réseau, selon une taille d'espace de stockage actuellement utilisé, si un traitement de rejet de paquet doit être réalisé sur des paquets qui appartiennent à un même flot de données dans l'espace de stockage actuellement utilisé comprend :

lorsque la taille de l'espace de stockage actuellement utilisé est entre une première limite et une seconde limite, le fait de déterminer, par le dispositif de réseau, si un traitement de rejet de paquet doit être réalisé sur les paquets qui appartiennent au même flot de données dans l'espace de stockage actuellement utilisé, dans lequel la première limite est inférieure à la seconde limite, et la seconde limite est inférieure ou égale à une capacité d'espace de stockage du dispositif de réseau ; et la détermination d'un second seuil actuel comprend :

la détermination du second seuil actuel selon la taille de l'espace de stockage actuellement utilisé et une relation de fonction entre une taille d'espace de stockage utilisé et un second seuil, dans lequel dans la relation de fonction entre la taille de l'espace de stockage utilisé et le second seuil, l'une de la première limite et de la seconde limite correspond à un second seuil minimal, et l'autre correspond à un second seuil maximal.

7. Procédé selon la revendication 6, dans lequel dans la relation de fonction entre la taille de l'espace de stockage utilisé et le second seuil, la taille de l'espace de stockage utilisé est corrélée positivement avec le second seuil ; et le fait de déterminer, selon le nombre aléatoire du flot de données et le second seuil actuel, si un traitement de rejet de paquet doit être réalisé sur les paquets dans le flot de données comprend :

lorsque le nombre aléatoire du flot de données est inférieur au second seuil actuel, la détermination que le traitement de rejet de paquet doit être réalisé sur les paquets dans le flot de données ; et lorsque le nombre aléatoire du flot de données est supérieur au second seuil actuel, la détermination que le traitement de rejet de paquet ne doit pas être réalisé sur les paquets dans le flot de données.

8. Dispositif de réseau (60), comprenant :

un module de détermination (601), configuré pour déterminer, selon une taille d'espace de stockage actuellement utilisé, si un traitement de rejet de paquet doit être réalisé sur des paquets qui appartiennent au même flot de données dans l'espace de stockage actuellement utilisé, dans lequel il y a N paquets qui appartiennent au même flot de données, et N $\geq$ 2 ; et un module de rejet (602), configuré pour rejeter, lorsque le module de détermination (601) détermine que le traitement de rejet de paquet doit être réalisé, M paquets continus qui appartiennent au même flot de données, dans lequel 1 < M $\leq$ N, dans lequel le flot de données est un flux de protocole de commande de transmission, TCP ; et le rejet de M paquets continus qui appartiennent au même flot de données comprend :

le rejet de M paquets qui ont des numéros de série TCP continus et qui appartiennent au même flux TCP.

9. Dispositif de réseau (60) selon la revendication 8, dans lequel le module de détermination (601) comprend :

une première unité d'acquisition, configurée pour acquérir des nombres aléatoires des N paquets qui appartiennent au même flot de données ; une première unité de détermination, configurée pour déterminer un premier seuil actuel, dans lequel le premier seuil actuel est une valeur critique pour déterminer si un rejet de paquet se produit dans le flot de données ; et une deuxième unité de détermination, configurée pour déterminer, selon les nombres aléatoires des N paquets acquis par la première unité d'acquisition et le premier seuil actuel déterminé par la première unité de détermination, si un traitement de rejet de paquet doit être réalisé sur les paquets qui appartiennent au même flot de données dans l'espace de stockage actuellement utilisé.

10. Dispositif de réseau (60) selon la revendication 9, dans lequel le module de détermination (601) est configuré pour : lorsque la taille de l'espace de stockage actuellement utilisé est entre une première limite et une seconde limite, déterminer si un traitement de rejet de paquet doit être réalisé sur les paquets qui appartiennent au même flot de données dans l'espace de stockage actuellement utilisé, dans lequel la première limite est inférieure à la seconde limite, et la seconde limite est inférieure ou égale à une capacité d'espace de stockage du dispositif de réseau ; et la première unité de détermination est configurée pour déterminer le premier seuil actuel selon la taille de l'espace de stockage actuellement utilisé et une relation de fonction entre une taille d'espace de stockage utilisé et un premier seuil, dans lequel dans la relation de fonction entre la taille de l'espace de stockage utilisé et le premier seuil, l'une de la première limite et de la seconde limite correspond à un premier seuil maximal, et l'autre correspond à un premier seuil minimal.

**11.** Dispositif de réseau (60) selon la revendication 10, dans lequel dans la relation de fonction entre la taille de l'espace de stockage utilisé et le premier seuil, la taille de l'espace de stockage utilisé est corrélée négativement avec le premier seuil ; et

la deuxième unité de détermination est configurée pour : lorsqu'une somme des nombres aléatoires des N paquets est inférieure au premier seuil actuel, déterminer qu'un traitement de rejet de paquet ne doit pas être réalisé sur les paquets qui appartiennent au même flot de données ; et lorsque la somme des nombres aléatoires des N paquets est supérieure au premier seuil actuel, déterminer qu'un traitement de rejet de paquet doit être réalisé sur les paquets qui appartiennent au même flot de données.

**12.** Dispositif de réseau (60) selon la revendication 8, dans lequel le module de détermination (601) comprend :

une seconde unité d'acquisition, configurée pour acquérir un nombre aléatoire du flot de données ;
une troisième unité de détermination, configurée pour déterminer un second seuil actuel, dans lequel le second seuil actuel est une valeur critique pour déterminer si un rejet de paquet se produit dans le flot de données ; et
une quatrième unité de détermination, configurée pour déterminer, selon le nombre aléatoire du flot de données acquis par la seconde unité d'acquisition et le second seuil actuel déterminé par la troisième unité de détermination, si un traitement de rejet de paquet doit être réalisé sur les paquets dans le flot de données.

**13.** Dispositif de réseau (60) selon la revendication 12, dans lequel le module de détermination (601) est configuré pour : lorsque la taille de l'espace de stockage actuellement utilisé est entre une première limite et une seconde limite, déterminer si un traitement de rejet de paquet doit être réalisé sur les paquets qui appartiennent au même flot de données dans l'espace de stockage actuellement utilisé, dans lequel la première limite est inférieure à la seconde limite, et la seconde limite est inférieure ou égale à une capacité d'espace de stockage du dispositif de réseau ; et
la troisième unité de détermination est configurée pour déterminer le second seuil actuel selon la taille de l'espace de stockage actuellement utilisé et une relation de fonction entre une taille d'espace de stockage utilisé et un second seuil, dans lequel dans la relation de fonction entre la taille de l'espace de stockage utilisé et le second seuil, l'une de la première limite et de la seconde limite correspond à un second seuil minimal, et l'autre correspond à un second seuil maximal.

**14.** Dispositif de réseau (60) selon la revendication 13, dans lequel dans la relation de fonction entre la taille de l'espace de stockage utilisé et le second seuil, la taille de l'espace de stockage utilisé est corrélée positivement avec le second seuil ; et
la quatrième unité de détermination est configurée pour : lorsque le nombre aléatoire du flot de données est inférieur au second seuil actuel, déterminer qu'un traitement de rejet de paquet doit être réalisé sur les paquets dans le flot de données ; et lorsque le nombre aléatoire du flot de données est supérieur au second seuil actuel, déterminer qu'un traitement de rejet de paquet ne doit pas être réalisé sur les paquets dans le flot de données.

A network device determines, according to a size of currently used storage space, whether packet discarding processing needs to be performed on packets that belong to a same data flow in the currently used storage space ⟋ S101

If packet discarding processing needs to be performed, the network device discards continuous M packets that belong to the same data flow ⟋ S102

FIG. 1

FIG. 2

FIG. 3

| Packet 1 | Packet 2 | Packet 3 | Packet 4 | Packet 5 | Packet 6 | Packet 7 | Packet 8 | Packet 9 | Packet 10 |
|---|---|---|---|---|---|---|---|---|---|
| Packet 11 | Packet 12 | Packet 13 | Packet 14 | Packet 15 | Packet 16 | Packet 17 | Packet 18 | Packet 19 | Packet 20 |
| Packet 21 | Packet 22 | Packet 23 | Packet 24 | Packet 25 | Packet 26 | Packet 27 | Packet 28 | Packet 29 | Packet 30 |

FIG. 4

TCP stream 1 | Packet 1 | Packet 3 | Packet 4 | Packet 10

TCP stream 2 | Packet 2 | Packet 5 | Packet 9 | Packet 14 | Packet 17 | Packet 18

TCP stream 3 | Packet 6 | Packet 7 | Packet 8 | Packet 13 | Packet 20 | Packet 22 | Packet 24 | Packet 26 | Packet 28

TCP stream 4 | Packet 11 | Packet 12 | Packet 15 | Packet 16 | Packet 19 | Packet 21 | Packet 23 | Packet 25 | Packet 27 | Packet 29 | Packet 30

FIG. 5

FIG. 6

FIG. 7

**EP 3 086 518 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005019540 A
- US 20100027425 A